Europäisches Patentamt

European Patent Office

Office européen des brevets

(11) Veröffentlichungsnummer: **0 304 885**

**A2**

(12) **EUROPÄISCHE PATENTANMELDUNG**

(21) Anmeldenummer: 88113768.1

(51) Int. Cl.4: **B29C 71/02 , B29C 49/64**

(22) Anmeldetag: 24.08.88

(30) Priorität: 24.08.87 DE 3728208

(43) Veröffentlichungstag der Anmeldung:
01.03.89 Patentblatt 89/09

(84) Benannte Vertragsstaaten:
DE FR GB IT

(71) Anmelder: KRUPP CORPOPLAST
MASCHINENBAU GMBH
Meiendorfer Strasse 203
D-2000 Hamburg 73(DE)

(72) Erfinder: Reymann, Wolfgang, Ing.(grad.)
Groten Hoff 15
D-2000 Hamburg 67(DE)
Erfinder: Jaksztat Wolf-Rüdiger,
Verfahrens-Ing.,
Lüdesring 83
D-2000 Hamburg 53(DE)

(74) Vertreter: Hauck, Hans, Dipl.-Ing. et al
Mozartstrasse 23
D-8000 München 2(DE)

(54) Verfahren zum Herstellen eines biaxial orientierten und thermofixierten Behälters.

(57) Zum Herstellen eines biaxial orientierten und thermofixierten Behälters ist erfindungsgemäß vorgesehen, daß von einem biaxial orientierten fertigen und ausreichend formbeständigen Behälter ausgegangen wird, der in einer auf die Temperatur zum Thermofixieren erwärmten Form eingeschlossen wird. Durch Innendruck wird der Behälter in Anlage an die Form gebracht und thermofixiert. Kurz vor dem Öffnen der Form zur Ausgabe des Behälters und während noch der Behälter unter Innendruck steht, wird in das Behälterinnere ein flüssiges Kühlmittel eingeführt, welches den thermofixierten Behälter abkühlt, bis er formbeständig ist und die Form geöffnet werden kann. Das erfindungsgemäße Verfahren zeichnet sich durch eine hohe Produktionsgeschwindigkeit aus.

## Verfahren zum Herstellen eines biaxial orientierten und thermofixierten Behälters

Die Erfindung betrifft ein Verfahren zum Herstellen eines biaxial orientierten und thermofixierten Behälters gemäß dem Oberbegriff des Patentanspruchs 1.

Es ist bekannt, Behälter aus einem thermoplastischen Polyester, insbesondere Polyethylenterephthalat (PET) bei Orientierungstemperatur und unter biaxialer Reckung herzustellen. Es ist ferner bekannt, daß die Behälter bei einer über der Orientierungstemperatur liegenden Temperatur thermostabilisiert oder thermofixiert werden können und dabei eine erhöhte Festigkeit erhalten. Im folgenden werden mehrere bekannte Arbeitsweisen zum Herstellen solcher biaxial orientierter und thermofixierter Behälter kurz erläutert.

Es ist bekannt (DE-PS 3307549), einen auf Orientierungstemperatur erwärmten Vorformling in einer Blasform unter biaxialer Orientierung aufzuweiten. Anschließend wird die Temperatur der Blasform auf Tempertemperatur erwärmt und der Behälter thermofixiert. Zum Erwärmen der Blasform sowie zum anschließenden Abkühlen, um vor dem Öffnen der Blasform den Behälter selbsttragend bzw. formbeständig zu machen, wird durch Kanäle in der Blasform heißes bzw. kaltes Öl geleitet.

Um das für jeden Herstellungsvorgang erforderliche Aufheizen und Abkühlen der Blasform zu vermeiden, ist es auch bekannt (DE-PS 3337651), schalenförmige dünne Blasformen zu verwenden, die von sie umgreifenden Formteilen formschlüssig abgestützt werden. Es brauchen so nur die dünnwandigen Blasformen erwärmt und gekühlt werden.

Um die Produktionsgeschwindigkeit zu erhöhen, ist es auch bekannt (DE-PS 3437136) mit zwei Blasformen zu arbeiten. Ein auf Orientierungstemperatur erwärmter Vorformling wird in einer Vorblasform ausgeblasen und dabei biaxial orientiert. Die Vorblasform selbst ist auf eine Temperatur zum Thermofixieren aufgeheizt, so daß der geblasene Zwischenformling thermofixiert wird, worauf der Zwischenformling in eine Fertigblasform überführt wird, in der er zum fertigen Behälter aufgeweitet wird, wobei die Fertigblasform entweder eine ein weiteres Thermofixieren bewirkende hohe Temperatur oder eine das Thermofixieren verhindernde niedrige Temperatur aufweist. Während des Überführens von der Vor- in die Fertigblasform muß der Behälter unter einem Innendruck gehalten werden.

In einem weiteren Verfahren (GB-PS 2009029) wird ebenfalls ein auf Orientierungstemperatur erwärmter Vorformling in eine Blasform verbracht, beim Aufweiten biaxial orientiert und in Anlage an die Blasform gebracht, die auf die Temperatur zum Thermofixieren erwärmt ist. Zum Abkühlen wird dann durch den Blasdorn Kühlluft in den Behälter eingeblasen. Zusätzlich ist die Blasform mit Kanälen zum Durchleiten eines Kühlmittels versehen.

Während der Orientierungstemperaturbereich um 100° C liegt, kann für das Thermofixieren eine Temperatur zwischen etwa 100° C bis zu 250° C gewählt werden. Die thermofixierten Behälter weisen eine erhebliche Festigkeitssteigerung und verbesserte Gassperreigenschaften auf. Ferner sind thermofixierte Behälter hoch hitzebeständig und eignen sich zum Abfüllen von stark erhitzten Flüssigkeiten oder Nahrungsmitteln, die z.B. zum Haltbarmachen pasteurisiert werden.

Die Verweilzeit der Behälter in der Blasform zum Thermofixieren beträgt unter 10 Sek. Die Produktionsgeschwindigkeit wird aber im wesentlichen durch die für die Behälter erforderliche Abkühlzeit bestimmt, d.h., der auf die sehr hohe Temperatur zum Thermofixieren erwärmte Behälter muß soweit abgekühlt werden, daß er formbeständig ist. Dazu kann er nach Öffnen der Blasform in der Außenluft abgekühlt werden, wobei der Behälter aber gestützt werden muß. Der Behälter kann ferner in eine kalte Form überführt werden (DE-PS 3437136), doch kann hierbei der Behälter schrumpfen und kann ein unerwünschter Umwandlungsprozeß des Kunststoffs eintreten. Wird aber der Behälter gekühlt, solange er noch in der Blasform verweilt, ist die Produktionsgeschwindigkeit sehr begrenzt.

Die der Erfindung zugrunde liegende Aufgabe besteht deshalb darin, biaxial orientierte Behälter derart thermisch zu fixieren, daß die Produktionsgeschwindigkeit stark erhöht wird und ein unerwünschtes Schrumpfen der Behälter infolge nicht ausreichender Formbeständigkeit vermieden wird.

Die genannte Aufgabe ist erfindungsgemäß durch die im kennzeichnenden Teil des Patentanspruchs 1 angeführten Merkmale gelöst.

Es wird als besonderer Vorteil des erfindungsgemäßen Verfahrens angesehen, daß von einem ausreichend abgekühlten und damit formbeständigen fertigen Behälter ausgegangen wird, der bereits im biaxial orientierten Zustand ist. Das erfindungsgemäße Verfahren kann deshalb anschließend an jedes Verfahren zum Herstellen eines biaxial orientierten Behälters ausgeübt werden. Die unter biaxialer Orientierung hergestellten Behälter können entweder unmittelbar nach einem ausreichenden Abkühlen thermofixiert werden oder nach einer entsprechenden Zwischenlagerung. Erfindungsgemäß erfolgt das Thermofixieren in einer getrennten Blasform. Vorzugsweise hat die Blasform, in der thermofixiert wird, eine Größe, die etwa die gleiche Größe wie die zur Herstellung des biaxial orientierten Behälters dienende Blasform aufweist. Durch eine bestimmte Übergröße soll vermieden werden, daß der Behälter beim Einschließen gestaucht oder eingequetscht wird. In der Regel wird die Übergröße weniger als 20 % des Volumens betragen. Die Übergröße ist auch abhängig von der Behälterform.

Während des Einschließens erwärmt sich bereits der Behälter durch Wärmestrahlung von der Forminnenwand der Blasform und wird dabei erweicht. Dementsprechend soll der Behälter im Vergleich zur Blasformhohlraumgröße nicht zu klein sein, da durch eine verhältnismäßig große Wandstärke des Behälters das Erwärmen verlangsamt wird. Die Übergröße der Blasform bestimmt sich so im wesentlichen einerseits danach, daß der Behälter ohne besondere Maßnahmen in einfacher Weise in die Form eingesetzt werden kann und andererseits danach, daß die Erwärmung möglichst schnell erfolgt.

Insbesondere wird aber auch in Betracht gezogen, daß der Behälter erst in der auf die Thermofixierungstemperatur erhitzten Blasform bestimmte Konturen erhält, beispielsweise eine Gestaltung seiner Oberfläche durch Einbringen von Rillen usw.

Um zu vermeiden, daß der Behälter die Form verliert, wird sofort Stützluft von ausreichendem Druck zugeführt oder steht der Behälter von Anfang an unter einem Innendruck.

Vorzugsweise weist die Blasform eine geringe Übergröße auf. Dies hat den Vorteil, daß beim Schließen der Formhälften ein Eintreten von erweichtem Material des Behälters in den Spalt zwischen den Formhälften vermieden wird.

Nach dem Schließen der Formhälften schreitet die Erweichung des Behälters fort und wird der Druck im Inneren des Behälters schlagartig erhöht, um die Wandungen des Behälters in Anlage an die Forminnenseiten zu bringen. Dabei wird der Behälter auf die hohe Kristallisationstemperatur erwärmt und wird eine bestimmte Zeitspanne, die unter 10 Sek. liegt, in Anlage an der Forminnenwand gehalten und dabei thermofixiert.

Zusätzlich wird durch einen Kanal in dem den Behälter in der Blasform haltenden Blasdorn in das Behälterinnere ein flüssiges Kühlmittel eingeführt. Das Zuführen des Kühlmittels erfolgt nach einer bestimmten für das Thermofixieren erforderlichen Zeitspanne. In dem abschließenden Zeitraum findet eine Überlappung beider Vorgänge, nämlich des Thermofixierens und des Kühlens insofern statt, als der Behälter von außen noch erhitzt und von innen bereits gekühlt wird. In diesem Zustand kann der Vorgang des Thermofixierens abgeschlossen werden und der Behälter soweit abgekühlt werden, daß nach dem Ablassen des hohen Innendrucks die Formhälften geöffnet und die formstabile Flasche sofort entfernt werden kann.

Bei dem erfindungsgemäßen Verfahren kommt es also darauf an, mit dem flüssigen Kühlmittel soviel Wärmeinhalt einzuführen, daß einerseits der Vorgang des Thermofixierens nicht leidet, der Behälter aber bis zur Formbeständigkeit abgekühlt werden kann. Erfindungsgemäß zeigt sich, daß dies möglich ist, wenn der Behälter in der Blasform von außen erwärmt und von innen gekühlt wird. Dabei ist der Zeitpunkt des Zuführens vom Kühlmittel nach dem Anlegen des Behälters an die Forminnenwand entsprechend zu wählen, wobei diese Zeit möglichst kurz sein soll.

Mit dem erfindungsgemäßen Verfahren erhält man einen formstabilen Behälter, da das Abkühlen bei geschlossener Form erfolgt und ein Überführen des Behälters vermieden ist. Die Blasform selbst wird kontinuierlich auf der zum Thermofixieren erforderlichen Temperatur gehalten, wobei die Heizleistung für die Blasform entsprechend hoch ausgelegt ist. Der Entzug von Wärme aus den Forminnenseiten durch das Abkühlen mit dem flüssigen Kühlmittel ist gering.

Vorzugsweise wird als flüssiges Kühlmittel Wasser verwendet. Wasser hat einen ausreichenden Wärmeinhalt, um den Behälter sehr schnell abzukühlen. Außerdem ist Wasser billiger als beispielsweise ein verflüssigtes Gas, das unter Umständen bei den hohen Temperaturen des Kunststoffes mit diesem zu unerwünschten chemischen Reaktionen oder Umsetzungen führen kann.

**Ansprüche**

1. Verfahren zum Herstellen eines biaxial orientierten und thermofixierten Behälters aus einem thermoplastischen Polyester, bei dem ein auf etwa Orientierungstemperatur erhitzter Vorformling in einer Blasform aufgeweitet, anschließend für eine bestimmte Zeitspanne auf einer Temperatur zum Thermofixieren gehalten und dann der Behälter durch Einblasen eines Kühlmittels abgekühlt und die Blasform geöffnet wird, dadurch gekennzeichnet, daß ein abgekühlter, formbeständiger Behälter in einer auf die Temperatur zum Thermofixieren erhitzten Blasform etwa gleicher Größe eingeschlossen und durch Innendruck zur Anlage an die Forminnenwand gebracht wird und daß ein flüssiges Kühlmittel eingespritzt wird.

2. Verfahren nach Anspruch 1, dadurch gekennzeichnet, daß das flüssige Kühlmittel nach einer bestimmten Zeitspanne nach dem Anlegen des Behälters an die Forminnenwand eingespritzt wird.

3. Verfahren nach Anspruch 1 oder 2, dadurch gekennzeichnet, daß der Wärmeinhalt, die Menge, der Einspritzzeitpunkt und die Einspritzzeitdauer des Kühlmittels so groß gewählt werden, daß der in Anlage an der Forminnenwand gehaltene Behälter thermofixiert und bis zur Formbeständigkeit abgekühlt wird.

4. Verfahren nach einem der Ansprüche 1 bis 3, dadurch gekennzeichnet, daß als Kühlmittel Wasser verwendet wird.

5. Verfahren nach einem der Ansprüche 1 bis 4, dadurch gekennzeichnet, daß der Behälter beim Einschließen in die Blasform auf einem verhältnismäßig niedrigen Innendruck gehalten wird.

6. Verfahren nach einem der Ansprüche 1 bis 5, dadurch gekennzeichnet, daß der Behälter nach dem Schließen der Blasform durch Erhöhung des Innendrucks in Anlage an die Forminnenwand gebracht wird.

7. Verfahren nach einem der Ansprüche 1 bis 6, dadurch gekennzeichnet, daß der Behälter beim Einschließen in die Blasform zunächst durch Wärmestrahlung erweicht, zum Anliegen an die Forminnenwand gebracht und dann auf die zum Thermofixieren erforderliche Temperatur erwärmt wird.

8. Verfahren nach einem der Ansprüche 1 bis 7, dadurch gekennzeichnet, daß beim Einschließen des Behälters in die Blasform ein Stauchen des Behälters vermieden wird.

9. Verfahren nach Anspruch 8, dadurch gekennzeichnet, daß ein Einquetschen des Behälters in den Formspalt der Blasform vermieden wird.

10. Verfahren nach einem der Ansprüche 1 bis 9, dadurch gekennzeichnet, daß der Behälter beim Anlegen an die Forminnenwand eine Volumenvergrößerung von weniger als 20 % erfährt.

11. Verfahren nach einem der Ansprüche 1 bis 10, dadurch gekennzeichnet, daß das flüssige Kühlmittel beim Einspritzen in den Behälter zerstäubt wird.

12. Verfahren nach einem der Ansprüche 1 bis 11, dadurch gekennzeichnet, daß feinere Konturen des Behälters erst in der Blasform für das Thermofixieren erzeugt werden.